# EUROPEAN PATENT SPECIFICATION

(11) **EP 2 046 629 B1**
(45) Date of publication and mention of the grant of the patent: **25.11.2009**
(21) Application number: 06780593.7
(22) Date of filing: 20.07.2006
(51) Int. Cl.: B62J 23/00, B62J 27/00

(54) **HAND GUARD FOR MOTORCYCLE HANDLEBAR**
HANDSCHUTZ FÜR MOTORRADLENKER
PROTÈGE MAIN POUR POIGNÉE DE GUIDON DE MOTOCYCLE

(43) Date of publication of application: 15.04.2009
(73) Proprietor: Sandro Mentasti S.r.l., 21100 Varese (IT)
(72) Inventor: MENTASTI, Edoardo, I-21100 Varese (IT)
(74) Representative: Pellegri, Alberto
(86) International application number: PCT/IT2006/000551
(87) International publication number: WO 2008/010245

(56) References cited:
- GB-A- 2 113 163
- JP-A- 10 297 568
- US-A1- 3 832 912
- US-A1- 4 438 661

## Description

The present invention relates to motorcycles and more in particular to comfort and/or protective accessories of motorcycles and specifically to hand guards applicable in front of the two grip and lever terminals of the handlebar.

A hand guard with all the features of the preamble of claim 1 is known from the document GB 2 113 163.

Hand guards in the form of a convex outer surface guard generally of a molded high resistance plastic material, with a bracket extending from the rear surface for fixing the guard to the handlebar are well known and employed especially on "off road" motorcycles to protect the hands from wind, mud, stones, gravel and other dangerous projectiles thrown by the rear wheels of preceding motorcycles and as a protection of the hand and the lever in case of falls to the ground.

Hand guards may prevent accidental impacts on the lever of the front wheel brake in the event of a contact with another racer, event that may hurl the rider frontwise and set the motorcycle in an awful lengthwise spin.

The use of hand guards has not become generalized apart in the off road domain because of concerns on the possibility that in case of accidental impacts the dynamic of which is such to tend to catapult frontwise the rider, the hand(s) may remain entrapped by the guard instead of being free to lift off the grip and lever, causing wrist fractures.

The applicants have found a new construction of a hand guard that, while preserving the protective function of the guard in case of "normal" accidental falls to the ground because of insufficient grip during a high speed turn, will ensure by contrast that in the event of an accident that may hurl the rider frontwise, the hand guard will safely yield to the dynamic force exerted by the writs or outer surface of the hand of the rider by rotating downward to permit a substantially unobstructed release of the hand engaged by the upper rim of the guard.

The invention rests on the introduction of a monodirectional, limited rotation joint between the fixing bracket and the guard for allowing a downward rotation by at least 45° or even by about 80°, opposed by an elastic element.

The monodirectionality of the limited rotation permitted by the joint preserves a protective function of the guard in case of a slide on the track by not permitting to the guard to lift up thus offering a protection to the gloved hand from rubbing on the track surfacing and/or present a direct impact of the lever that if it brakes would impede prosecution of the race while promptly yielding in case of pressure exerted by the hand or wrist of the rider on the upper rim of the guard in case of the rider being flung frontwise because of an accidental impact with a resisting obstacle.

The invention is defined in the annexed claims.

### BRIEF DESCRIPTION OF THE DRAWINGS

**Figures 1** and **2** are views from front and from above, respectively, of a hand guard of this invention.
**Figures 3** and **4** are a cross section and a plan view of a monodirectional, limited rotation joint, according to a first embodiment.
**Figures 5** and **6** are a cross section and a plan view, respectively, of a monodirectional, limited rotation joint, according to an alternative embodiment.
**Figures 7** and **8** illustrate the action of the monodirectional, limited rotation joint that sustains the guard.
**Figures 9** and **10** are a cross section and a plan view of a further embodiment of this invention, including a second monodirectional, limited rotation joint acting about an axis of rotation orthogonal to the axis of rotation of the main joint.
**Figures 11** and **12** are perspective views of the hand guard assembly according to the embodiment of Figures 9 and 10, showing the respective functions of the two joints.

### DESCRIPTION OF SEVERAL PREFERRED EMBODIMENTS OF THE INVENTION

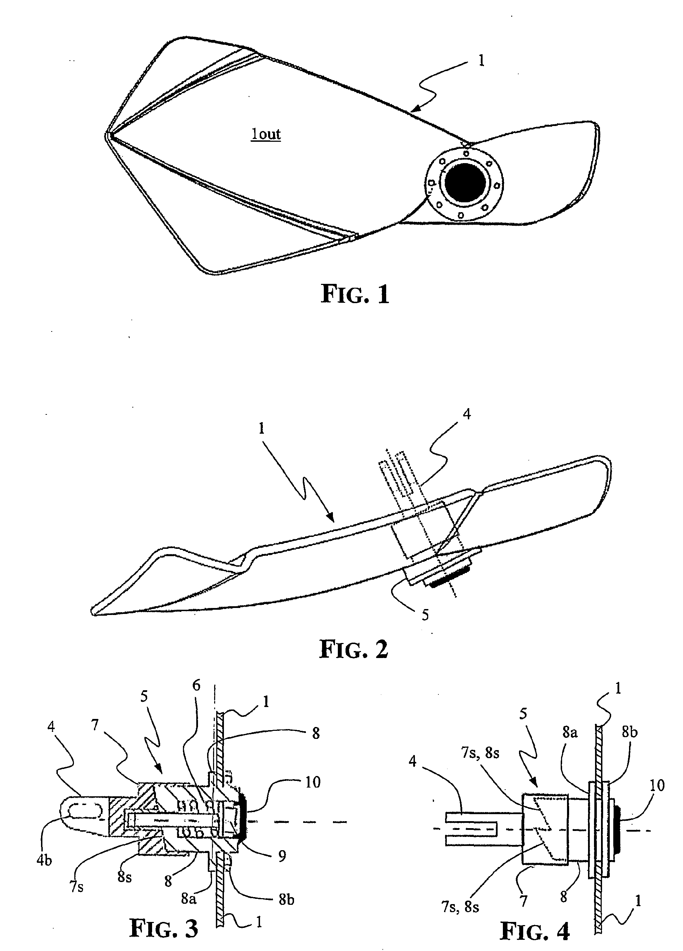

Figures 1 and 2 are views from front and from above of a prototype test sample of a hand guard made according to the present invention, wherein a molded reinforced plastic shield 1, functionally shaped with a generally convex front surface lout, is installed on a joining device 5 terminating with a fork-shaped fixing bracket 4.

The bracket appendix 4, provided with slotted holes 4b for the passage of the stem of a fixing bolt, for solidly mounting the hand guard assembly onto a dedicated lug (not shown in the figures) fastened to the handlebar, is, according to this invention, connected to the guard 1 through a monodirectional, limited rotation joint, indicated as a whole with 5 in the figures.

Figures 3 and 4 are a cross section and a plan view of the monodirectional, limited rotation joint, according to a first embodiment.

According to this embodiment, the monodirectionality and the angular limitation of rotation of the joint are implemented by two telescopically coupled cylindrical parts 7 and 8, having specularly inclined matching surfaces 7s and 8s that are loaded in a head-to-head abutment by a pre-compressed spring 6. Precompression of the spring 6, by driving the assembly and load adjusting screw 9 into an axial threaded hole at the bottom of the cylindrical cavity of the fixed part 7 of the joint.

A plastic cap 10 closes the cavity that accommodates the contrasting spring 8 and the assembly and pre-loading screw 9.

The fixed part 7 of the joint is fastened to the handlebar. In the shown embodiment, part 7 of the joint terminates with a fork-shaped mounting bracket 4, provided with the slotted holes 4b. A projecting lug, fastened to the handlebar, (not shown in the figures) is received between the two arms of the fork bracket 4 and a bolt is eventually tightened to fasten the hand guard to the handle bar in the desired position, as allowed by the slotted holes 4b.

As noted, the fixed part 7 has a cylindrical cavity for telescopically receiving the cylindrical part 8 of the bottom of which is machined to form two circumferential sectors, each smaller than 180°, generally of about 170°, sequentially inclined in a saw-tooth fashion.

Part 8 telescopically fits into the cylindrical cavity of part 7 and has an end surface specularly machined in two circularly disposed inclined sectors, matching those of the bottom surface of the cylindrical cavity of part 7.

Part 8 sustains the plastic hand guard 1 that, in the sample embodiment shown, is held between a flange 8a and a counter flange 8b.

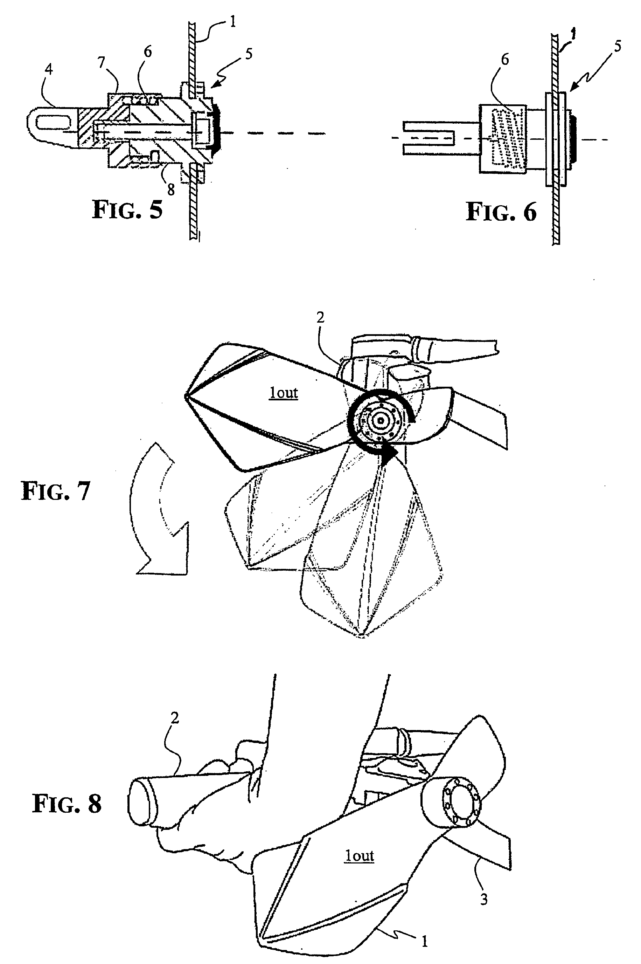

Figures 5 and 6 are respectively a cross section and a plan view of a monodirectional, limited rotation joint, according to an alternative embodiment of this invention and wherein parts having the same function of equivalent parts of the device of the previously described embodiment of Figures 4 and 5 are identified with the same numbers.

According to this alternative embodiment, the monodirectionality and limitation of the rotation of the guard holding part 8 in relation to the fixed part 7 of the joint, are established by a torsion spring 6.

Of course other equivalent monodirectional, limited rotation joints, of different construction from those of the above described embodiments can be employed. In particular the function of the contrasting spring may be implemented by employing an elastomer either in a torsion or deflection contrasting mode, as will be easily recognized by a skilled artisan.

Figures 7 and 8 illustrate the action of the monodirectional, limited rotation joint that sustains the guard. As depicted the monodirectional (downward) rotation of the guard when so urged by the hand of the rider takes place about a substantially horizontal axis of rotation.

Optionally, for further enhancing the purposely introduced monodirectional yielding properties of the hand guard assembly of this invention, to the function of the above described main or primary monodirectional, limited rotation joint sustaining the guard in order not to impede the exiting of the hand from the space between the lever and the guard, may be associated a distinct cooperative function of a second or ancillary monodirectional, limited rotation joint permitting a monodirectional sideway bending of the assembly toward the front wheel fork head of the motorcycle, also including an elastically contrasting element.

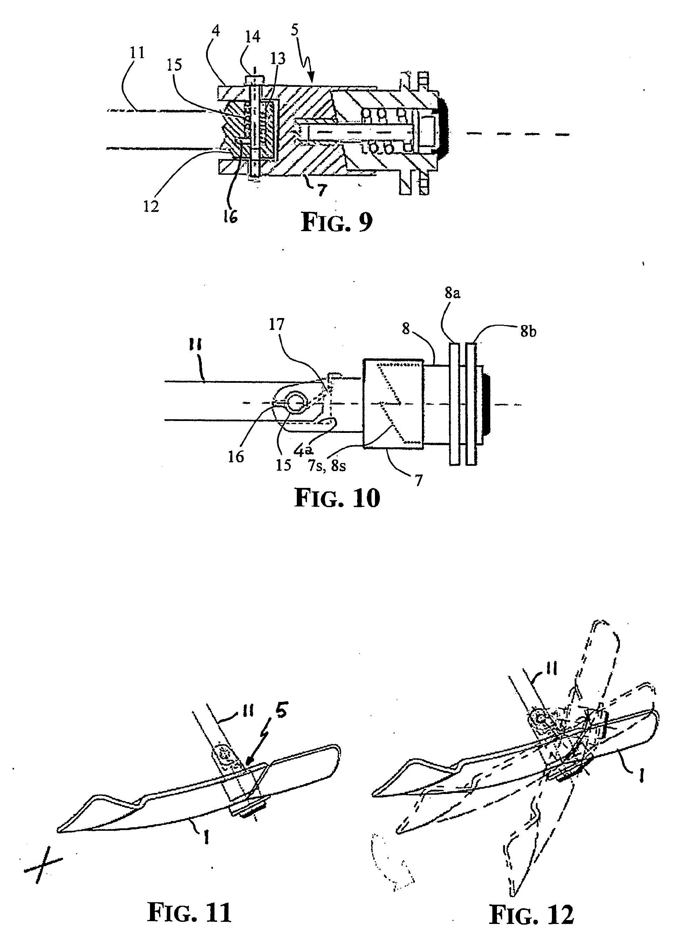

Figures 9 and 10 show an embodiment of such an optional multiple joint assembly for supporting the hand guard.

In the sample illustration are reproduced the features that provide for the monodirectional, limited rotation about a generally horizontal axis of rotation of the joint 5, according to the embodiment of Figures 3 and 4.

As may be observed in the sectional view of Figure 9 and on the view from above of Figure 10, the bracket termination of the joint assembly couples with a terminal lug 12 of a support arm 11 solidly fastened to the handlebar. The fixing bolt of the prior embodiments is this case a connection pin 14, a threaded end of which is driven in a threaded hole in one of the two arms of the fork termination, such to allow a relative rotation of the main joint assembly 5 relative to the supporting lug 12. The through hole of the lug 12 has an enlarged portion forming a cylindrical cavity 13 that accommodates a torsion spring 15, a bent wire end 16 of which is retained in a radial cavity of the cylindrical wall and the other wire end 17 tangentially extends to meet at an angle of inclination the inner end surface of the fork bracket.

As may be observed in the view from above of Figure 10, the bracket termination 4 of the part 7 of the main limited rotation joint 5 has a bridging portion 4a closing the side of the termination toward the outer end of the handgrip of the handlebar, that impedes any relative rotation (clockwise in the figure) of the bracket around the pivot pin 14 of the joint while allowing rotation in the opposite direction. The tangentially extending wire end 17 of the torsion spring 15 exerts a contrasting force by elastically yielding when the hand guard is urged to a frontwise direction by the hand of the rider.

Figures 11 show the hand guard assembly when not solicited and Figure 12 when it is urged downward and/or forward by the hand-wrist of the rider. In the latter situation, the allowed monodirectional limited rotations will be anticlockwise about both the horizontally oriented axis of rotation and about the vertically oriented axis of rotation, for the case of the right hand side hand guard shown in the figures. Conversely, in the case of the left hand hand guard, the permitted rotations will be both clockwise.

Of course, also the secondary joint function can be implemented with any suitable modirectional, limited rotation joint including an elastically contrasting element. For example, the joint assembly of Figures 3 and 4, or of Figures 5 and 6 may be connected instead of through a fork shaped fixing bracket, by a relatively short robust elastomer stem restrained on the grip and lever side by a rigid channel projecting from the handle bar stand or from part 7 of the joint, containing the elastomer stem for allowing, besides the monodirectional downward rotation ensured by the joint 5, also a monodirectional sideway bending of the elastomer stem out of the containing and side-restraining rigid channel toward the front/wheel fork head, under the force of the hand urged against the upper rim of the guard 1 that will tend to divaricate frontwise the hand guard 1.

As it will be readily recognized, the rotating part 8 of the main joint 5 may be molded in a monolithic piece together with the hand guard 1, already shaped and ready to receive the assembling screw and the eventual compression or torsion spring, and to fit with the other part 7 of the primary joint 5, thus without requiring any fastening fixtures between the part 8 and the guard 1.

## Claims

1. Hand guard for a grip and lever terminal (2) of a motorcycle handlebar (3), including a convex outer surface (1out) guard (1) having a bracket protrusion (4) extending from its rear surface for fixing the guard (1) to the handlebar (2), **characterized in that** it comprises
a monodirectional, limited rotation joint (5) between said fixing bracket (4) and the guard (1) allowing downward rotation by at least 80°, opposed by an elastic element (6).

2. The hand guard of claim 1, **characterized in that** said joint (5) comprises two telescopically coupled cylindrical parts (7, 8), one of which connected to said fixing bracket and the other to the guard, with specularly inclined surfaces (7s, 8s), axially loaded in a head-to-head abutment by a compression spring (6).

3. The hand guard of claim 1, **characterized in that** said joint (5) comprises two coupled cylindrical parts (7, 8), the monodirectional, limited rotation of one part (8) relative to the other part (7) connected to said fixing bracket (4) being opposed by a torsion spring (6).

4. The hand guard of claim 1, **characterized in that** it further comprises a second monodirectional, limited rotation joint allowing a relative rotation of said first joint (5) and said guard (1) assembly around a vertically oriented axis of rotation monodirectionally toward the front wheel fork head of the motorcycle.

5. The hand guard of claim 4, **characterized in that** said second joint is composed of a fork shaped bracket terminal (4) of said first monodirectional, limited rotation joint (5) pivotally connected to a mounting lug (12) by a pivot pin (14), said fork shaped bracket terminal (4) having a bridging portion (4a) closing the side of the fork termination toward the outer end of the handgrip of the handlebar for preventing any relative rotation **in that** direction of said mounting lug (12), and a torsion spring (15) elastically resisting relative rotation in the opposite direction toward the front wheel fork head of the motorcycle.

6. The hand guard of claim 4, **characterized in that** said joint (5) is connected to said fixing bracket (4) by a side restrained elastomer stem allowing a monodirectional sideway bending on the stem toward the front wheel fork head of the motorcycle.

## Patentansprüche

1. Handschutz für ein Griff- und Hebelendstück (2) eines Motorradlenkers (3), der einen Schutz (1) mit konvexer Außenfläche (lout) mit einen Haltervorsprung (4), der sich von seiner Rückfläche erstreckt, zur Befestigung des Schutzes (1) am Lenker (2) umfaßt, **dadurch gekennzeichnet, daß** er aufweist
ein Einrichtungsgelenk (5) mit begrenzter Drehung zwischen dem Befestigungshalter (4) und dem Schutz (1), das eine Drehung um mindestens 80° nach unten zuläßt, dem ein elastisches Element (6) gegenüberliegt.

2. Handschutz nach Anspruch 1, **dadurch gekennzeichnet, daß** das Gelenk (5) zwei teleskopisch gekoppelte zylindrische Teile (7, 8), von denen eines mit dem Befestigungshalter und das andere mit dem Schutz verbunden ist, mit spiegelbildlich geneigten Oberflächen (7s, 8s) aufweist, die durch eine Druckfeder (6) axial in einer Kopf-an-Kopf-Auflage belastet sind.

3. Handschutz nach Anspruch 1, **dadurch gekennzeichnet, daß** das Gelenk (5) zwei gekoppelte zylindrische Teile (7, 8), aufweist, wobei sich eine Torsionsfeder (6) der begrenzten Einrichtungsdrehung eines Teils (8) relativ zum anderen Teil (7) widersetzt, das mit dem Befestigungshalter (4) verbunden ist.

4. Handschutz nach Anspruch 1, **dadurch gekennzeichnet, daß** er ferner ein zweites Einrichtungsgelenk mit begrenzter Drehung aufweist, das eine Relativdrehung der Anordnung des ersten Gelenks (5) und des Schutzes (1) um eine vertikal orientierte Drehachse in eine Richtung zum Vorderradgabelkopf des Motorrads zuläßt.

5. Handschutz nach Anspruch 4, **dadurch gekennzeichnet, daß** das zweite Gelenk aus einem gabelförmigen Halterendstück (4) des ersten Einrichtungsgelenks (5) mit begrenzter Drehung, das durch einen Drehzapfen (14) drehbar mit einem Befestigungsansatz (12) verbunden ist, wobei das gabelförmige Halterendstück (4) einen Überbrückungsabschnitt (4a) aufweist, der die Seite des Gabelendes zum äußeren Ende des Handgriffs des Lenkers verschließt, um jede Relativdrehung in jene Richtung des Befestigungsansatzes (12) zu verhindern, und einer Torsionsfeder (15) zusammengesetzt ist, die einer Relativdrehung in die entgegengesetzte Richtung zum Vorderradgabelkopf des Motorrads Widerstand leistet.

6. Handschutz nach Anspruch 4, **dadurch gekennzeichnet, daß** das Gelenk (5) mit dem Befestigungshalter (4) durch einen seitlich eingespannten Elastomerschaft verbunden ist, der eine seitliche Biegung in eine Richtung auf dem Schaft zum Vorderradgabelkopf des Motorrads zuläßt.

## Revendications

1. Protection de main pour embout de poignée et levier (12) d'un guidon de motocycle (3), comprenant une surface extérieure convexe (1out) de protection (1) comportant une patte support (4) s'étendant à partir de sa surface arrière pour fixer la protection (1) sur le guidon (2), **caractérisée en ce qu'**elle comprend
une articulation monodirectionnelle à rotation limitée (5) entre le support de fixation (4) et la protection (1), permettant une rotation vers le bas d'au moins 80 degrés, contrée par un élément élastique (6).

2. Protection selon la revendication 1, **caractérisée en ce que** l'articulation (5) comprend deux pièces cylindriques couplées de façon télescopique (7, 8), dont l'une est connectée au support de fixation et l'autre à la protection, avec des surfaces inclinées de façon spéculaire (7s, 8s), butant axialement tête contre tête et sollicitées par un ressort de compression (6) .

3. Protection de main selon la revendication 1, **caractérisée en ce que** l'articulation (5) comprend deux pièces cylindriques couplées (7, 8), la rotation monodirectionnelle limitée d'une des pièces (8) par rapport à l'autre pièce (7) connectée au support de fixation (4), étant contrée par un ressort de torsion (6).

4. Protection de main selon la revendication 1, **caractérisée en ce qu'**elle comprend en outre une deuxième articulation monodirectionnelle à rotation limitée, permettant une rotation relative de la première articulation (5) et de l'ensemble de protection (1) autour d'un axe de rotation orienté verticalement et de façon monodirectionnelle vers la tête de fourche de roue avant du motocycle.

5. Protection de main selon la revendication 4, **caractérisée en ce que** la deuxième articulation est composée d'une extrémité support en forme de fourche (4) de la première articulation monodirectionnelle à rotation limitée (5) connectée de façon pivotante à un élément de montage (12) par une tige pivot (14), ladite extrémité support en forme de fourche (4) comportant une partie de pontage (4a) fermant le côté de la terminaison de la fourche vers l'extrémité extérieure de la poignée du guidon pour empêcher toute rotation relative dans cette direction de l'élément de montage (12), et un ressort de torsion (15) résistant de façon élastique à la rotation relative dans la direction opposée vers la tête de la fourche de roue avant du motocycle.

6. Protection de main selon la revendication 4, **caractérisée en ce que** l'articulation (5) est connectée au support de fixation (4) par une tige latérale en élastomère contraint permettant une courbure latérale monodirectionnelle de la tige vers la tête de fourche de roue avant du motocycle.
